# EUROPÄISCHE PATENTANMELDUNG

(11) **EP 2 933 455 A1**
(43) Veröffentlichungstag der Anmeldung: **21.10.2015**
(21) Anmeldenummer: 15164027.3
(22) Anmeldetag: 17.04.2015
(51) Int. Cl.: F01N 5/00, F01N 5/02, F01N 5/04, H01G 11/32, H01G 11/36, H01G 11/40, H01G 2/02, H01G 2/04, H01G 4/20

(54) **ABSCHIRMTEIL**

(30) Priorität: 17.04.2014 DE 102014105537
(71) Anmelder: ElringKlinger AG, 72581 Dettingen/Erms (DE)
(72) Erfinder: Beyerlein, Gerd-Sebastian, 90482 Nürnberg (DE)
(74) Vertreter: Schmidt, Axel

(57) **Zusammenfassung**

Die vorliegende Erfindung betrifft ein Abschirmteil, das insbesondere für einen Einsatz in einem Personenkraft- oder Nutzfahrzeug ausgebildet und auf metallischer oder polymerer Basis mit keramischen oder wiederum polymeren Dämmstoffen aufgebaut ist.

Um einen Einsatz- und Aufgabenbereich eines Abschirmsystems der vorstehend genannten Art zu erweitern, wird vorgeschlagen, dass das Abschirmteil (1) zur Speicherung elektrischer Energie mindestens teilweise als Speicher (5) ausgebildet ist.

## Beschreibung

Die vorliegende Erfindung betrifft ein Abschirmteil, wie es insbesondere an Verbrennungskraftmaschinen oder einem Abgasstrang in einem Personenkraft- oder Nutzfahrzeug vorgesehen ist.

Gegenwärtig können Abschirmteile in betreffenden Systemen nach ihrer Funktion unterteilt werden in solche, die thermischen, akustischen und/oder mechanischen Schutz und/oder Abschirmung im Bereich einer Verbrennungskraftmaschine und einem damit verbundenen Abgasstrang bieten. In der Praxis ist es erstrebenswert, derartige Abschirmteile möglichst universell auszulegen, so dass im Idealfall alle Anforderungen von einem einzigen Abschirmteil erfüllt werden. Abhängig von dem Haupteinsatzort und den thermischen Randbedingungen können Abschirmsysteme auf metallischer, keramischer oder polymerer Basis mit keramischen oder wiederum polymeren Dämmstoffen aufgebaut werden.

Aus dem Stand der Technik sind diverse Ansätze für Aufbau und Anordnung von Abschirmteilen der vorstehend genannten Art bekannt, die z.B. einer Begrenzung einer thermischen Abstrahlung zum Schutz benachbarter Komponenten oder einer generellen Minderung einer Schallemission dienen. Gegenwärtig werden derartige Bauteile größtenteils flächig als thermische und/oder akustische Abschirmteile mehrlagig bzw. in mehreren separaten Lagen ausgeführt, wobei grundsätzlich sämtliche denkbare Kombinationen aus metallischen, polymeren und/ oder keramischen Schichten zu mehrlagigen Bauteilen in diversen Druckschriften beschrieben und auch anforderungsgerecht hergestellt werden können.

Die vorliegende Erfindung hat das Ziel, einen Einsatz- und Aufgabenbereich eines Abschirmsystems der vorstehend genannten Art zu erweitern.

Diese Aufgabe wird erfindungsgemäß durch die Merkmale von Anspruch 1 dadurch gelöst, dass das Abschirmteil zur Speicherung elektrischer Energie ausgebildet ist. Damit ist die Funktion des Abschirmteils in einen völlig neuen technischen Bereich hinein erweitert worden. Zu Möglichkeiten der technischen Ausführung eines Speichers für elektrische Energie wird an dieser Stelle auf die nachfolgend diskutierten Merkmale von abhängigen Ansprüchen sowie die Beschreibung von Ausführungsbeispielen verwiesen.

Vorteilhafte Weiterbildungen sind Gegenstand der Unteransprüche. Demnach ist das Abschirmteil zur Speicherung elektrischer Energie ausgebildet und in einer besonders bevorzugten Weiterbildung mit einem System zur Energierückgewinnung aus einer Abwärme, Schallemission und/oder mechanischer Energie insbesondere in Form von mechanischen Schwingungen bzw. Vibrationen verbunden.

Gemäß dieser Weiterbildung der Erfindung bietet ein Abschirmteil nun den Vorteil, aus Abwärme, Schallemission und/oder Vibration gewonnene bzw. zurück gewonnene oder aber durch eine Anbindung an ein induktives Ladesystem eingespeiste elektrische Energie unabhängig von einem jeweiligen Gesamtsystem speichern zu können. Darüber hinaus könnten Abschirmsysteme auf diese Weise zukünftig wichtigere Aufgaben, wie die Bordnetzversorgung im Fahrzeug, zumindest kurzfristig und über eine begrenzte Zeit hinweg übernehmen. Durch diese Funktionsintegration werden der Nutzen eines entsprechend ausgebildeten Abschirmteils und damit auch sein Wert gesteigert. Diese vorteilhafte Erweiterung betrifft insbesondere flächige Abschirmteile, die in Systemen mit elektrischem Antrieb, insbesondere jedoch in Hybrid-Systemen mit Mischbetrieb mit einem zusätzlichen verbrennungsmotorischen Aggregat in Personenkraft- oder Nutzfahrzeugen Anwendung finden.

Der aktuelle Stand der Technik bei Abschirmteilen sieht keine Möglichkeit zur Energiespeicherung oder gar Energierückgewinnung vor. Betreffende Abschirmsysteme sind nur in passiver Ausführung bekannt, das heißt es gibt keine Möglichkeit, derartige Teile durch eine Mehrnutzung in intelligente, vernetzte Systeme zumindest als Notversorgung zu integrieren.

Vorteilhafte Weiterbildungen sind Gegenstand der Unteransprüche. Demnach ist in dem Abschirmteil ein Speicher mit Elektroden vorgesehen, die auf der Basis elektrisch leitender Carbon-Aerogele aufgebaut sind. Vorzugsweise sind die Elektroden aus elektrisch leitenden Carbon-Aerogel-Fasern als Textil ausgebildet.

In einer weiteren Ausführungsform der Erfindung ist dieser Speicher in einem Werkstoffsystem mit ebenfalls elektrisch leitenden Geweben oder Gelegen aufgebaut, beispielsweise Geweben oder Gelegen aus Carbon- oder Metallfasern.

Besonders bevorzugt wird, dass in zumindest einer Fasermischung der Elektroden ein Fremdfaser-Anteil zur auch dreidimensionalen Formgebung einer jeweiligen Elektrode vorgesehen ist. So kann eine Elektrode z.B. im Zuge einer thermischen Behandlung dauerhaft sogar in eine dreidimensionale Form gebracht werden. Die Auswahl- und Gestaltungsfreiheit für mögliche Einsatzfälle und Anwendungsgebiete wird damit gesteigert. Eine regelmäßig mindestens teilweise nasschemisch erfolgende Herstellung von Aerogelen schafft zudem die Möglichkeit einer Ausbildung einer Elektrode in einer Endform. Im Gegensatz zu einer Bereitstellung als flächige Halbzeuge ist damit in einer Ausführungsform der Erfindung eine Herstellung mindestens einer Elektrode des Speichers mit einer bauteilspezifischen Endform bzw. Kontur auch unter Berücksichtigung einer prozessbedingten Schrumpfung möglich. Auch hierdurch wird eine neue Gestaltungsfreiheit unter Anpassung an eine optimierte Nutzung eines verfügbaren Bauraums erzielt.

Als Weiterbildung ist vorgesehen, dass innerhalb des Speichers ein Separator aus Glasfasern, Kunststoff-Folie oder einer Silikat- und/oder Keramik-Schicht vorgesehen ist.

Dabei ist der Speicher für elektrische Energie vorzugsweise als flächiger Superkondensator aufgebaut. Ein in dem Abschirmteil bzw. Abschirmsystem integrierter Speicher in Form eines Superkondensators ist vorzugsweise dazu ausgebildet, ein Ladeniveau von Batterien in einer sehr kurzen Zeit deutlich zu erhöhen. Er ist neben normalen Ladevorgängen unter anderem auch zur Notfallversorgung von Batterien oder für einen Ausgleich von Bedarfsengpässen, beispielsweise bei der Klimatisierung in sehr kalter Umgebung, geeignet ausgelegt.

Vorzugsweise ist ein erfindungsgemäßes Abschirmteil mit einem System zur Energierückgewinnung verbunden oder gar kombiniert, wobei das System zur Energierückgewinnung vorteilhaft auch in das Abschirmsystem integriert oder am dem Abschirmsystem angeordnet ist. Als ein derartiges System zur Energierückgewinnung sind insbesondere thermoelektrische Systeme gut geeignet, die auch extern bzw. außerhalb des Speichers in oder an dem Abschirmteil vorgesehen sein können, besondere Vorteile eines kompakten Aufbaus aber bei interner Anordnung mit sich bringen. In letzterem Fall kann der physikalisch innerhalb des Speichers erforderliche Separator auch gleich für einen gewissen Teil dessen Aufladung sorgen, wenn im Bereich dieses Separators ein für thermo-elektrische Generatoren ausreichender Temperaturunterschied anliegt. Dabei können flexible thermo-elektrische Generatoren als gekoppelte Peltier-Elemente z.B. in Form kleiner Halbleiter-Bauelemente vorgesehen sein, die den Seebeck-Effekt zur Erzeugung elektrischer Energie unter Einwirkung eines thermischen Gradienten ausnutzen und über biegsame Verbindungen an ihren jeweiligen Anschlüssen bzw. Elektrodenflächen parallel verschaltet werden. Derartige biegsame Verbindungen der Anschlüsse ließen sich z.B. in der Form von metallischen Plättchen realisieren, wodurch eine insgesamt verformbare generatorisch wirkende Vorrichtung auch in Form einer Fläche herstellbar ist. In jeder dieser vorstehend grob angegebenen Formen wird ein mit Energierückgewinnungsmaßnahmen ausgestattetes Abschirmteil geschaffen.

In einer besonders bevorzugten Ausführungsform der vorliegenden Erfindung ist ein Abschirmteil mit elektrischen Speicher offen zur Einspeisung und Speicherung weiterer elektrischer Energieflüsse von externen elektrischen Energieerzeugern, zum Beispiel aus der Bremsenergierückgewinnung, ausgebildet.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine dreidimensionale Ansicht auf einen Schnitt durch ein aus dem Stand der Technik bekanntes Abschirmteil mit einer Erweiterung gemäß einem ersten Ausführungsbeispiel und
- Figur 2:: eine Einzelheit von Figur 1;
- Figur 3:: eine Draufsicht auf das Ausführungsbeispiel von Figur 1 unter Erweiterung um einen thermo-elektrischen Energiewandler und mindestens eine externe Zufuhr elektrischer Energie über induktive Einspeisung;
- Figur 4:: ein Ausschnitt eines dreidimensional strukturierten Abschirmteils und
- Figur 5:: eine vergrößerte Darstellung eines Schnitts A-A von Figur 4.

Über die verschiedenen Abbildungen hinweg werden für gleiche Elemente stets die gleichen Bezugszeichen verwendet.

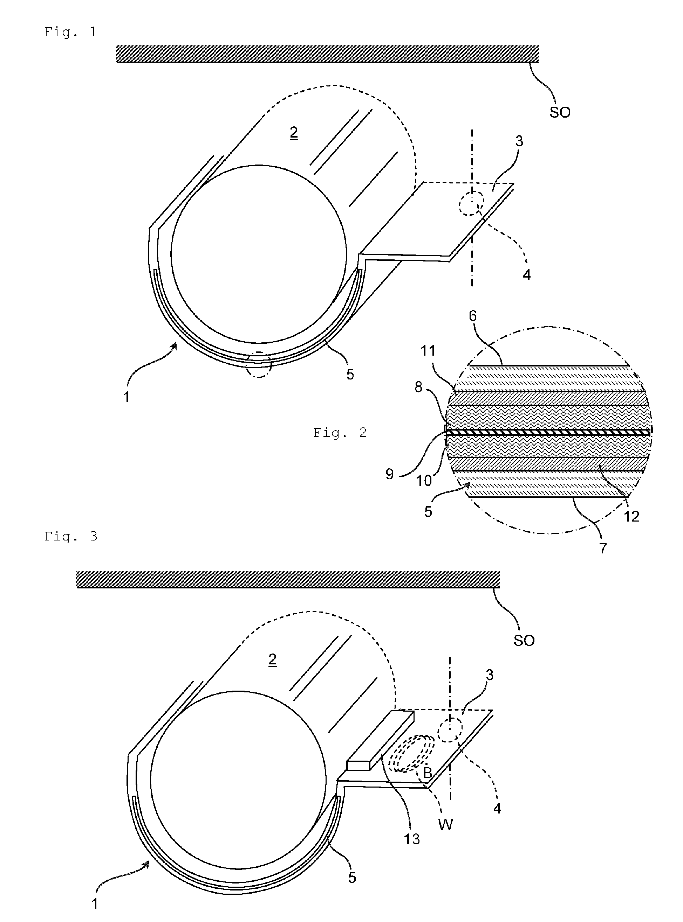

Die Abbildung von Figur 1 zeigt ein Abschirmteil 1 als Komponente eines nicht weiter im Detail dargestellten Abschirmsystems an einem Abgasstrang 2 eines Kfz, wobei das Abschirmteil 1 den Abgasstrang 2 in dem dargestellten Bereich gegenüber einem nicht weiter dargestellten Unterboden des Kfz abschirmt, aber zu einer Straßenoberfläche SO hin offen ist. Dabei liegt der Abgasstrang 2 zu einer Straßenoberfläche hin frei. Das Abschirmteil 1 läuft im vorliegenden Ausführungsbeispiel in einem ab dem Abgasstrang 2 angrenzenden Bereich in eine Lasche 3 aus, in der eine Ausnehmung 4 angedeutet ist, über die das Abschirmteil 1 an dem nicht weiter dargestellten Kfz-Unterboden z.B. durch Verschraubungen fixiert ist.

Die Schnittdarstellung der Abbildung von Figur 1 zeigt als dreidimensionale Ansicht, dass in dem Abschirmteil 1, als Erweiterung gegenüber bekannten Abschirmteilen, die auf metallischer, keramischer und/oder polymerer Basis und keramischen oder wiederum polymeren Dämmstoff aufgebaut sind, im Bereich einer Dämmschicht ein Speicher 5 zur Speicherung elektrischer Energie angeordnet ist. Dieser Speicher 5 kann als Kondensator oder Akkumulator ausgebildet sein. Er kann aber in Form eines Superkondensators auch eine Mischform bilden.

Die Abbildung von Figur 2 zeigt eine Einzelheit der Schnittdarstellung des Abschirmteils 1 von Figur 1 in einer Vergrößerung. Demnach ist zwischen einer inneren metallischen Schicht 6 und einer äußeren metallischen Schicht 7 des Abschirmteils 1 in einer nicht weiter dargestellten thermischen Dämmschicht der elektrische Energiespeicher 5 abgeordnet. Der Energiespeicher 5 weist hierzu eine erste Elektrode 8 auf, die als Carbon-Aerogel-Gebilde ausgeführt ist. Auf einen isolierenden Separator 9 folgend ist eine zweite Elektrode 10 vorgesehen. Zu den metallischen Flächen 6, 7 mit nicht weiter dargestellten thermischen Isolierungen hin, sind die Elektroden 8, 10 durch Isolationsschichten 11, 12 getrennt.

Mit dem vorstehend beschriebenen grundsätzlichen Aufbau ist der elektrische Energiespeicher 5 jedoch nicht eben, sondern in einer dreidimensionalen Verformung den Erfordernissen des Abschirmteils 1 entsprechend ausgeformt. Dem Carbon-Aerogel-Textil der beiden Elektroden 8, 10 sind hierzu alternativ zur Ausbildung einer entsprechenden Matrix organische oder anorganische Binder in fester oder flüssiger Form beigegeben worden, die als Ersatz für die Fremdfasern zu einer plastischen Verformbarkeit des sich ergebenden Verbunds und nach Abschluss einer Fertigung zu dessen Formbeständigkeit auch im thermisch belasteten Umfeld eines Abgasstrangs 2 führen.

In Erweiterung der Ausführungsform gemäß Figur 1 ist in Figur 3 im Bereich eines thermischen Gradienten ein thermoelektrischer Generator 13 an dem Flansch 3 angeordnet. Damit kann ein Teil der von dem Abgasstrang 2 abgegebenen und von dem Abschirmteil 1 abgeschirmten und abgeleiteten Wärmeenergie unter Nutzung eines Temperaturgefälles zur Außenwelt hin in dem thermoelektrischen Generator 13 in elektrische Energie umgewandelt werden. Diese kann wiederum in dem elektrischen Speicherelement 5 gespeichert werden. Hierzu ist dieses Speicherelement 5 vorteilhafter Weise als flächiger Superkondensator ausgebildet, in dem der Separator 9 aus Glasfaser, Kunststofffolie oder einer Silikat- und/oder Keramikschicht besteht. Damit ist dieser, in dem Abschirmteil 1 integrierte elektrische Speicher 5 in der Form eines Kondensators in der Lage, ein Ladeniveau von Batterien für Komponenten zumindest in einer nächsten Umgebung über einen kurzen Zeitraum hinweg deutlich zu erhöhen oder im Falle eines Energieausfalls zu puffern.

Diese Speichermöglichkeit kann jedoch auch offen für beliebige Systeme zur Energierückgewinnung nutzbar ausgebildet sein, was nachfolgend nicht weiter im Detail beschrieben werden soll. Es ist jedoch auch möglich, ein System zur Energierückgewinnung in das Abschirmsystem 1 selber zu integrieren. Hierzu ist es möglich, dass als System zur Energierückgewinnung ein thermoelektrisches System genutzt wird, das in Abweichung zu der Darstellung der zweiten Ausführungsform gemäß Figur 3 nun in nicht weiter dargestellter Art und Weise als Ersatz für den Separator 9 in flächiger Form als Trennschicht zwischen den beiden Elektroden 8, 10 verwendet wird. Hierzu sind bekannte Techniken zum Aufbau von thermoelektrischen Generatoren in Dünnschicht, wie jedoch auch ein konkreter Aufbau auf Basis von Halbleitergliedern in gekoppelter Kettenanordnung denkbar, vorzugsweise als Vorrichtung zur Ausnutzung des sogenannten physikalischen Seebeck-Effektes.

In diesem letztgenannten Fall ist es umgekehrt auch möglich, eine gezielte Temperatursteuerung über dem vorstehend beschriebenen Kern des Abschirmteils 1 dahingehend zu bewirken, dass in Umkehrung des Seebeck-Effekts der Separator als flächiges Peltier-Element wirkt, das unter Stromfluss einem gerichteten Wärmetransport hervorruft.

Ferner ist in der Darstellung von Figur 3 eine Anbindung an ein induktives Ladesystem eingespeiste elektrische Energie angedeutet. Hierzu ist ein Spulensystem beispielhaft im Bereich des Flansches 3 des Abschirmteils 1 schematisch in Form mehrerer Windungen W mit dem Hinweis auf ein zeitlich veränderliches Magnetfeld B eingezeichnet worden. Diese Windungen W stehen ebenfalls zur Energieeinspeisung mit dem elektrischen Speicherelement 5 in Verbindung, das somit offen auch für eine externe Energieeinspeisung ist. Die Anordnung der Windungen W auf dem metallischen Abschirmteil 1 stellte den Fachmann vor dem Hintergrund der induktiven Einkopplung von externer Energie vor Probleme, zu denen Lösungen insbesondere aus dem Bereich der sog. RFID-Technik bekannt sind. So kann ein sehr kompaktes Bauteil realisiert werden. Integrierte Lösungen zur Energieumwandlung für eine Zwischenspeicherung sind hier ebenfalls bekannt und können auch für den Fall übernommen werden, dass die Windungen W außerhalb des Abschirmteils 1 angeordnet sind und lediglich eine Verbindung zu dem Speicherelement 5 in dem Abschirmteil 1 vorgesehen ist.

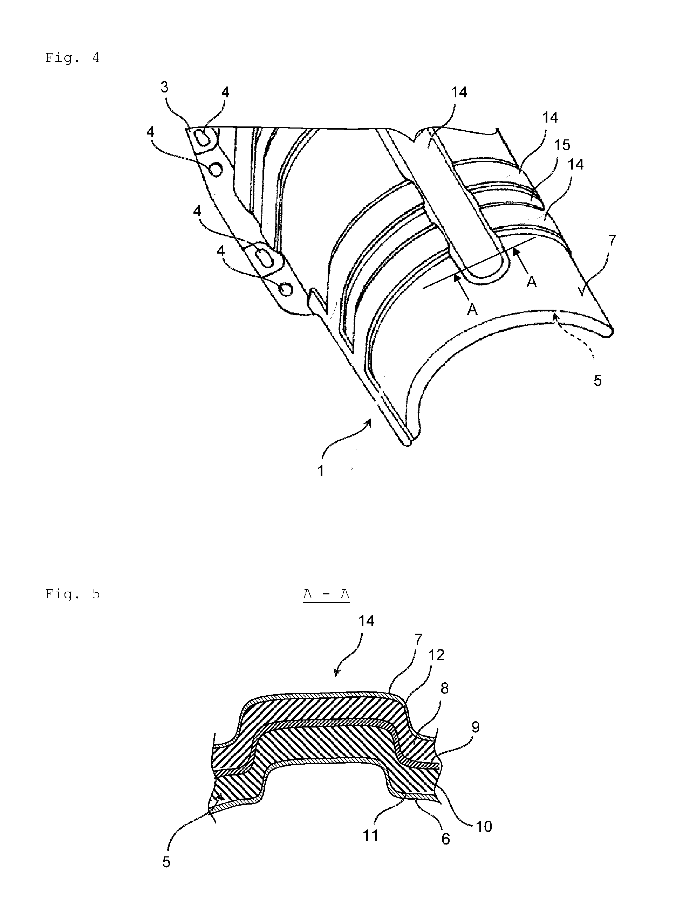

Abschließend zeigt Figur 4 am Beispiel eines Ausschnitts eines dreidimensional strukturierten Abschirmteils 1 ein weiteres Beispiel für einen internen Aufbau eines Abschirmteils 1 mit einem Mittel zur Speicherung elektrischer Energie in Form eines Superkondensators. Das dreidimensional strukturierte Abschirmteil 1 weist diverse Strukturelemente in Form von Verrippungen 14 und Sicken 15 auf, die zur Aussteifung in einer Längs- wie Querrichtung relativ zu dem Abschirmteil 1 verlaufen.

Der Schnitt in der Ebene A-A von Figur 5 zeigt in einer vergrößerten Darstellung eine Lage eines Energiespeichers 5 mit einem verformbaren Energiespeicher 9 zwischen zwei Elektroden 8, 10, die durch Isolationsschichten 11, 12 gegenüber einer inneren metallischen Schicht 6 und einer äußeren metallischen Schicht 7 elektrisch separiert sind. Aufgrund einer durch den Fachmann geeignet gewählten Materialzusammenstellung ist damit der Energiespeicher 5 einer Form des Abschirmteils 1 exakt entsprechend angepasst oder wird sogar gemeinsam mit diesen verformt. Die Elektroden 8, 10 sind hier sortenrein aus einem Carbon-Aerogel-Faser-Gewebe hergestellt worden. Die sortenreinen Elektroden 8, 10 werden in einem abschließenden Schritt der Fertigung mit einem hier nicht weiter dargestellten Elektrolyt getränkt mit dem Vorteil, dass ein großes aktives Volumen zur Verwendung bereit steht.

Im Fall einer entsprechenden maximalen Temperaturbelastung und insbesondere bei einem Einsatz als eine akustische Abschirmung in einem Niedertemperaturbereich ist es auch möglich, den Anteil textiler Bestandteile eines erfindungsgemäßen Abschirmteils 1 auch dadurch noch zu erhöhen, dass die Isolationsschichten 11, 12 ebenfalls als Textilien ausgeführt sind. An deren Oberfläche können dann auch Taschen zur weiteren lokalen Verbesserung einer dämpfenden Wirkung vorgesehen sein. Hierin können dann aber auch wahlweise Sensoren oder sonstige Messzellen o.ä. durch einfaches Einstecken fixiert sein.

### Bezugszeichenliste

- 1: Abschirmteil
- 2: Abgasstrang
- 3: Lasche/Flansch
- 4: Ausnehmung
- 5: Energiespeicher
- 6: innere metallische Schicht
- 7: äußere metallische Schicht
- 8: erste Elektrode
- 9: Separator
- 10: zweite Elektrode
- 11: Isolationsschicht
- 12: Isolationsschicht
- 13: Generator
- 14: Verrippung
- 15: Sicke

- Ḃ: zeitlich veränderliches Magnetfeld zur induktiven Einspeisung elektrischer Energie
- SO: Straßenoberfläche
- W: Windungen

## Patentansprüche

1. Abschirmteil, das insbesondere für einen Einsatz in einem Personenkraft- oder Nutzfahrzeug ausgebildet und auf metallischer, keramischer und/oder polymerer Basis mit keramischen oder wiederum polymeren Dämmstoffen aufgebaut ist,
**dadurch gekennzeichnet, dass**
das Abschirmteil (1) mindestens teilweise als Speicher (5) zur Speicherung elektrischer Energie ausgebildet ist.

2. Abschirmteil nach dem vorhergehenden Anspruch, **dadurch gekennzeichnet, dass** in dem Abschirmteil (1) ein Speicher (5) mit Elektroden (8, 10) auf der Basis elektrisch leitender Carbon-Aerogele vorgesehen ist, vorzugsweise unter Ausbildung einer Elektrode in einer bauteilspezifischen Endform.

3. Abschirmteil nach dem vorhergehenden Anspruch, **dadurch gekennzeichnet, dass** die Elektroden (8, 10) aus elektrisch leitenden Carbon-Aerogel-Fasern als Textil ausgebildet sind.

4. Abschirmteil nach einem der vorhergehenden Ansprüche,
**dadurch gekennzeichnet, dass** der Speicher (5) in einem Werkstoffsystem mit ebenfalls elektrisch leitenden Geweben oder Gelegen aufgebaut ist, insbesondere aus Carbon- oder Metallfasern.

5. Abschirmteil nach einem der beiden vorhergehenden Ansprüche 2 - 4, **dadurch gekennzeichnet, dass** in einer Fasermischung der Elektroden (8, 10) ein Fremdfaser-Anteil und/oder ein Anteil organischer oder anorganischer Binder zur auch dreidimensionalen Formgebung der Elektroden (8, 10) vorgesehen ist.

6. Abschirmteil nach einem der vorhergehenden Ansprüche, **dadurch gekennzeichnet, dass** ein innerhalb des Speichers (5) vorzusehender Separator (9) aus Glasfaser, Kunststoff-Folie, Silikat- und/oder Keramik-Schicht gebildet ist.

7. Abschirmteil nach einem der vorhergehenden Ansprüche, **dadurch gekennzeichnet, dass** der Speicher (5) als flächiger Superkondensator ausgebildet ist.

8. Abschirmteil nach einem der vorhergehenden Ansprüche, **dadurch gekennzeichnet, dass** ein in dem Abschirmteil (1) bzw. Abschirmsystem integrierter Speicher (5) in Form eines Superkondensators dazu dimensioniert und ausgebildet ist, ein Ladeniveau von Batterien in einer kurzen Zeit deutlich zu erhöhen.

9. Abschirmteil nach einem der vorhergehenden Ansprüche, **dadurch gekennzeichnet, dass** das Abschirmteil (1) mit einem System zur Energierückgewinnung aus Abwärme, Vibration und/oder Schallemission und/oder einem induktiven Ladesystem verbunden ist, wobei das System zur Energierückgewinnung in das Abschirmteil (1) integriert oder an dem Abschirmteil (1) angeordnet ist und das Abschirmteil (1) insbesondere offen zur Einspeisung und Speicherung weiterer elektrischer Energieflüsse ausgebildet ist, insbesondere für elektrische Energieflüsse aus einer Rekuperation bzw. Bremsenergierückgewinnung.

10. Abschirmteil nach dem vorhergehenden Anspruch, **dadurch gekennzeichnet, dass** das System zur Energierückgewinnung ein thermoelektrisches System ist, das als flexibler thermo-elektrischer Generator (13) und vorzugweise als innerhalb des Speichers (5) vorzusehender Separator (9) ausgebildet ist.
